(19) Europäisches Patentamt
European Patent Office
Office européen des brevets

(11) Veröffentlichungsnummer: **0 269 862 B1**

(12) **EUROPÄISCHE PATENTSCHRIFT**

(45) Veröffentlichungstag der Patentschrift: **25.09.91**

(51) Int. Cl.⁵: **H04L 9/00, E05B 49/00**

(21) Anmeldenummer: **87115857.2**

(22) Anmeldetag: **29.10.87**

(54) **Erweiterbares Hochsicherheitscodierverfahren.**

(30) Priorität: **31.10.86 FR 8615170**

(43) Veröffentlichungstag der Anmeldung:
**08.06.88 Patentblatt 88/23**

(45) Bekanntmachung des Hinweises auf die
Patenterteilung:
**25.09.91 Patentblatt 91/39**

(84) Benannte Vertragsstaaten:
**DE ES FR GB IT**

(56) Entgegenhaltungen:
**EP-A- 0 027 423**
**EP-A- 0 098 437**
**EP-A- 0 103 791**

**IBM TECHNICAL DISCLOSURE BULLETIN,
Band 26, Nr. 1, Juni 1983, Seiten 199-201,
New York, US; W.D. HOPKINS: "Transaction
incrementing message authentication key"**

(73) Patentinhaber: **VALEO NEIMAN**
**12bis, rue Maurice Berteaux**
**F-78290 CROISSY-SUR-SEINE(FR)**

(72) Erfinder: **Philippe, Patrick**
**Chemin de la Pissotte**
**F-78440 Jambville(FR)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft ein erweiterbares Codierverfahren unter Benutzung einer halbzufälligen unstetigen Funktion.

Die elektronischen Codierungen von Sicherheitsvorrichtungen, insbesondere im Bereich der Fernsteuerung, zerfallen in drei große Gruppen:

1. Festcodes
2. variable Codes nach einem stetigen Gesetz
3. variable Codes nach einem unstetigen Gesetz

Die beiden erstgenannten Codearten weisen den ernsten Nachteil auf, daß sie eine relativ leichte Decodierung ermöglichen, im Falle der ersten Gruppe durch Aufzeichnung eines gesendeten Signals und im Falle der zweiten Gruppe durch Aufzeichnung mehrerer Signale zur Ableitung des Variationsgesetzes.

Die Codes der dritten Art bitten bieten eine weit höhere Sicherheit, weil sich der Code nach jeder Benutzung entsprechend einer unstetigen mathematischen Funktion durch Erzeugung halbzufälliger Zahlen ändert, wobei dieses Gesetz für jede Sender-Empfänger-Einheit unterschiedlich ist und mit einem spezifischen Basiscode verbunden ist.

Dennoch handelt es sich bei solchen unstetigen mathematischen Funktionen, die halbzufällige Zahlen erzeugen, in jedem Falle um bedingte Funktionen, die Auslesen zwischen einem Minimalwert und einem Maximalwert bewirken. Der Maximalwert läßt sich relativ einfach entsprechend der Anzahl der gesendeten Bits ableiten. Ein systematisches Abfragen sämtlicher Werte bis zum Maximalwert erlaubt im allgemeinen die Entriegelung der Sicherheitsvorrichtung.

Aus der EP-A-0027423 ist ein Codierverfahren bekannt, bei dem jedes Wort einer Nachricht durch eine Funktion in Abhängigkeit von einem weiteren Wort erzeugt wird, das in einem Zwischenspeicher abgespeichert wird. Dieses weitere Wort wird wiederum mittels einer zweiten Funktion in Abhängigkeit von einem unveränderlichen, fest vorgegebenen Wort und dem durch die erste Fundktion erzeugten Wort selbst berechnet.

Dieses bekannte Codierverfahren führt somit zu einer sehr komplexen Schaltungsanordnung, erfordert einen hohen Aufwand an elektronischen Bauteilen und bedingt einen hohen Preis für die Vorrichtung zur Ausführung dieses Codierverfahrens.

Vorliegende Erfindung hat dagegen die Aufgabe, die Sicherheit der Vorrichtungen unter Benutzung einer Codierung mit variblen Codes nach einem unstetigen Gesetz auf einfache Weise beträchtlich zu erhöhen.

Zu diesem Zweck ist der Gegenstand der Erfindung ein erweiterbares Codierverfahren unter Benutzung einer halbzufälligen unstetigen Funktion, dadurch gekennzeichnet, daß eine Nachricht mit wenigstens zwei halbzufälligen Codes gesendet wird, die aufeinanderfolgend mittels der halbzufälligen unstetigen Funktion von einem für jedes einzelne Übertragungssystem spezifisch Basiscode berechnet worden sind, und daß die Nachricht außerdem einen Code enthält, der mittels einer stetigen Funktion von dem Basiscode abgeleitet worden ist.

Nachstehend wird ein Anwendungsbeispiel der Erfindung beschrieben.

Bezeichnet man den spezifischen Basiscode des Systems als C, so kann dieser Code C durch Verdrahtung (Matrix) oder durch elektronische Speicherung einer Zahl erzielt werden.

Auf elektronischem Wege wird eine Umwandlung T (c) des Codes C bewirkt.

Entsprechend dem Code C und der Anzahl N der Sendungen erhält man auch eine halbzufällige unstetige Funktion FA (C,N).

Entsprechend einem Anwendungsbeispiel der Erfindung setzt sich die gesendete Nachricht, die gelesen werden muß, um die Entriegelung des Systems zu ermöglichen, wie folgt zusammen:

$$T(C) + FA(C,n-1) + FA(C,n)$$

Dies bedeutet, daß diese Nachricht jeweils einen ersten Abschnitt $T(C)$ enthält, der dem Wert einer stetigen variablen Funktion des Basiscodes C entspricht, einen zweiten Abschnitt $FA(C,n-1)$, der dem Wert der halbzufälligen unstetigen Funktion für den Basiscode C, für die $(n-1)$te Sendung, entspricht, und einen dritten Abschnitt $FA(C,n)$, der dem Wert der gleichen Funktion für die $n^{te}$ Sendung entspricht.

Die Funktion $FA(C,N)$, die in Sende- und Empfangs-Mikrorechnern programmiert ist, ist nur dem Entwerfer bekannt, und die Anzahl N Sendungen, die auch von den Mikrorechnern gespeichert wird, ist ebenfalls nicht zugänglich.

Ist die obere Schranke der halbzufälligen Auslese ausreichend hoch, z.B. 999 999, so ist die Wahrscheinlichkeit, durch anschließende Versuche die beiden Werte $FA(C,n-1)$ und $FA(C,n)$ zu finden, äußerst geringe im vorangegangenen Beispiel in der Größenordnung von $10^{-12}$.

## Patentansprüche

1. Erweiterbares Codierverfahren unter Benutzung einer halbzufälligen unstetigen Funktion, **dadurch gekennzeichnet,** daß eine Nachricht mit wenigstens zwei halbzufälligen Codes gesendet wird, die aufeinanderfolgend mittels der halbzufälligen unstetigen Funktion von einem für jedes einzelne Übertragungssystem spezifisch Basiscode berechnet worden sind, und daß die Nachricht außerdem einen Code enthält, der mittels einer stetigen Funktion von dem Basiscode abgeleitet worden ist.

## Claims

1. An evolutive method employing a discontinuous function alterable in a semi-random manner,
   **characterized in that** a message is transmitted comprising at least two semi-random codes which are calculated consecutively by means of the discontinuous function which is altered in a semi-random manner according to a base code which is specific for each individual transmission system, and that the message comprises also a code which is derived from the base code by means of a continuous function.

## Revendications

1. Procédé de codage évolutif utilisant une fonction discontinue semi-aléatoire, caractérisé en ce qu'on émet un message ayant au moins deux codes semi-aléatoires qui sont calculés successivement au moyen de la fonction discontinue semi-aléatoire à partir d'un code de base spécifique propre à chaque système de tansmission, et en ce que le message contient en outre un code déduit par une fonction continue à partir du code de base.